# EUROPÄISCHE PATENTSCHRIFT

(11) **EP 3 056 083 B1**
(45) Veröffentlichungstag und Bekanntmachung des Hinweises auf die Patenterteilung: **07.04.2021**
(21) Anmeldenummer: 16154996.9
(22) Anmeldetag: 10.02.2016
(51) Int. Cl.: A01M 7/00

(54) **LANDWIRTSCHAFTLICHE FELDSPRITZE**
AGRICULTURAL SPRAYER
PULVÉRISATEUR AGRICOLE

(30) Priorität: 11.02.2015 DE 102015101982
(43) Veröffentlichungstag der Anmeldung: 17.08.2016
(73) Patentinhaber: Lemken GmbH & Co. KG, 46519 Alpen (DE)
(72) Erfinder: Gerdelmann, Reinhard, 49740 Haselünne (DE)

(56) Entgegenhaltungen:
- EP-A1- 2 586 304
- WO-A1-99/52354
- DE-A1-102007 025 751

## Beschreibung

Die Erfindung betrifft eine landwirtschaftliche Feldspritze gemäß dem Oberbegriff des Patentanspruches 1.

Landwirtschaftliche Feldspritzen verfügen über sehr breite Verteilgestänge, welche üblicherweise pendelnd und höhenverstellbar an der Feldspritze aufgehängt sind. Diese Verteilgestänge bestehen aus mehreren Segmenten, welche manchmal, aber nicht zwingend ebenso pendelnd bzw. vertikal schwenkbar zueinander angeordnet sind, um eine optimale Anpassung an die überfahrene Bodenkontur zu erreichen, insbesondere bei hängigem oder kupiertem Gelände. Das Verteilgestänge bzw. seine Segmente erstrecken sich quer zur Fahrtrichtung auf eine Arbeitsbreite bis über 40m. Für den Straßentransport kann das Verteilgestänge durch Falten der einzelnen Gestängesegmente in eine Transportbreite von unter 3m verstaut werden. Die Verteilsegmente des Verteilgestänges verfügen über diese Leitungen, an welchen im gleichmäßigen Abstand Flachstrahldüsen zur Ausbringung von Flüssigkeiten angeordnet sind. Um eine gleichmäßige Benetzung des Pflanzenbestandes bzw. des überfahrenen Bodens mit dem Sprühstrahl der Flachstrahldüsen zu gewährleisten, ist eine konstante Höhenführung der Flachstrahldüsen und somit der Gestängesegmente in einem vorgegebenen Abstand über der Zielfläche von Nöten. Dies wird durch aktive oder passive Stellelemente wie beispielsweise Federn, Dämpfer oder Stellmotoren erreicht, welche die Beweglichkeit des Verteilgestänges bzw. seiner Segmente in vertikaler Richtung manipulieren. Durch den Einsatz von Abstandssensoren, welche an einem Teil der Segmente angebracht sind, kann in Verbindung mit einer Steuer- und Regeleinrichtung die stetige Anpassung an die Zielflächenkontur angepasst werden. Die europäische Patentschrift EP 26 30 856 B1 beschreibt ein solches System detailliert. Allerdings sind die dort genannten Ultraschallsensoren unmittelbar am Verteilgestänge angeordnet. Durch auftretenden Sprühnebel und insbesondere bei der Verwendung von Doppel-Flachstrahldüsen, deren Sprühfächer teilweise schräg nach vorn gerichtet sind, wird die Messgenauigkeit der Ultraschallsensoren erheblich beeinflusst. Dem kann durch eine schräge Anordnung der Ultraschallsensoren entgegen der Fahrtrichtung begegnet werden, indem die Schallkeule der Sensoren vor dem Sprühstrahl auf die Zielfläche trifft. Mit zunehmender Schrägstellung sinkt aber die Genauigkeit der Sensoren. Sowohl die PCT-Anmeldung WO 99/ 52 354 A1 als auch die europäische Publikation EP 2 586 304 A1 schlagen jeweils Abstandsarme zur Befestigung von Glasfaserlichtleitern bzw. Sensoren vor, welche mittels hydraulisch, pneumatisch oder elektrisch bedienbarer Aktoren verschiebbar oder schwenkbar sind. Hierfür ist eine separate Energiezufuhr und eine aufwändige Sequenz-Steuerung, zusammenfassend als Fremdkraftaktorik bezeichnet, erforderlich.

Aufgabe der Erfindung ist es, eine Sensoranordnung bereit zu stellen, welche die oben genannten Nachteile vermeidet, zugleich aber ohne weitere Aktionen des Bedieners von einer Transport- in eine Arbeitsstellung überführt werden kann. Dabei soll auf eine zusätzliche Fremdkraftaktorik zur Betätigung der Sensoranordnung verzichtet werden, um aufwendige Folgeschaltungen oder Bedienfehler beim Falten des Gestänges in Transportstellung und umgekehrt in Arbeitsstellung zu vermeiden.

Diese Aufgabe wird durch die Merkmale des kennzeichnenden Teiles des Anspruches 1 gelöst.

Indem die Abstandmesseinrichtung an einem ausreichend langen Arm angeordnet ist, welcher in Arbeitsstellung des Verteilgestänges von diesem absteht, kann die Abstandmesseinrichtung senkrecht zur Zielfläche angeordnet werden und wird in ihrer Messgenauigkeit nicht von Sprühnebel oder vom Sprühstrahl beeinflusst. Die Betätigung des Armes zum Wechsel zwischen einer Transport- und einer Arbeitsstellung erfolgt dabei durch die Faltbewegung des Verteilgestänges bzw. der Schwenkbewegung der einzelnen Verteilsegmente zueinander.

Indem die Schwenkbewegung des Armes etwa die Hälfte des Schwenkwinkels eines Verteilsegments zu einem weiteren Verteilsegment beschreibt, stellt sich in Arbeitsstellung des Verteilgestänges in Fahrtrichtung der Feldspritze gesehen ein maximaler Abstand der Abstandmesseinrichtung zum Verteilgestänge bei minimaler Armlänge ein. Die einzelnen Verteilsegmente schwenken vorzugsweise aus einer parallel zueinander angeordneten Transportposition um 180 Grad in eine seriell hintereinander angeordnete Arbeitsposition. Somit ergibt sich ein Schwenkwinkel von vorzugsweise 90 Grad, welcher bis zu 15 Grad von der Idealposition abweichen darf.

Insbesondere bei Verwendung von Doppelflachstrahldüsen oder im Sprühstrahl schräg nach vorne angestellten Düsen entspricht die Länge des Armes oder der Abstand der Abstandsmesseinrichtung zu einem Verteilsegment in Fahrtrichtung gesehen zumindest dem Betrag des empfohlenen Düsenabstandes zur überfahrenen Bodenoberfläche bzw. zur Bestandsoberkante des auf der Bodenoberfläche befindlichen Pflanzenbestandes. Da solche Düsen in der Regel ca. 0,5m über der Zielfläche positioniert werden und Strahlwinkel der Düsen in Fahrtrichtung nicht über 45 Grad liegen, ist eine minimale Armlänge bzw. ein Abstand der Messeinrichtung zum Verteilgestänge von 0,5m zu bevorzugen.

Indem der Arm beweglich an einem ersten Verteilsegment angeordnet ist und mit einem Koppelmechanismus versehen ist, welcher den Arm gelenkig mit einem weiteren Verteilsegment verbindet, wird getriebetechnisch ein fehlerfreier, kontinuierlicher Zwanglauf zwischen dem Arm und den benachbarten Verteilsegmenten gewährleistet.

In einer anderen Ausführungsform ist der Arm gelenkig mit einem Verteilsegment verbunden und verfügt über zwei Anschlagelemente oder Anschlagflächen: Dabei begrenzt ein erstes Anschlagelement die Schwenkbewegung vom Arm zum Verteilsegment, an welchem der Arm montiert ist. Diese Armendlage entspricht der vom Verteilgestänge abstehenden Arbeitsstellung. Ein weiteres Anschlag- oder Gleitelement überführt durch Kontakt mit einem weiteren Verteilsegment während der Faltbewegung des Verteilgestänges den Arm in eine Transportstellung oder umgekehrt in Arbeitsstellung.

Durch Anordnung eines Energiespeichers wie einer Feder oder einem Federdämpferelement, beispielsweise einer Gasfeder, zwischen Arm und Verteilgestänge kann der Arm in einer Arbeits- und/oder Transportlage gehalten oder fixiert werden. Gerade in Verbindung mit den zuvor genannten Anschlägen wird der Arm in einer Endlage gehalten, während das weitere Verteilsegment die restliche Hälfte des Schwenkwinkels beschreibt.

Durch mehrteilige Ausgestaltung des Armes, wobei ein erster Teil mit einem ersten Verteilsegment gelenkig verbunden ist und ein zweiter Teil mit einem benachbarten Verteilsegment gelenkig verbunden ist und der erste und der zweite Teil des mehrteiligen Armes ebenfalls gelenkig miteinander verbunden sind, entsteht ein v-förmiger Scherenmechanismus, welcher einen Zwanglauf der V-Gelenkspitze um den halben Schwenkwinkel der benachbarten Verteilsegmente zueinander beschreibt.

Die Erfindung zeichnet sich insbesondere dadurch aus, dass eine Abstandmesseinrichtung zur Führung des Verteilgestänges einer landwirtschaftlichen Feldspritze während des Spritzbetriebes mittels eines Armes aus dem Bereich der Sprühfächer der Verteildüsen in Fahrtrichtung nach vorne verlagert wird, wodurch die Messgenauigkeit und somit die Regelgüte der Führung des Verteilgestänges entscheidend verbessert wird, indem einerseits Sprühnebel als Fehlerquelle ausgeschaltet wird und andererseits eine Vorverlagerung des Messpunktes vor das Spritzgestänge gerade bei höheren Fahrgeschwindigkeiten eine Verringerung der erforderlichen Reaktionsgeschwindigkeit der Steuerungs- und Regelungseinrichtung ermöglicht und somit ebenfalls zur Regelgüte beiträgt. Damit beim Zusammenfalten oder Klappen des Verteilgestänges in Transportposition der Arm nicht nennenswert aus der Verteilgestängekontur herausragt, bewegt sich dieser mechanisch durch Zwanglauf mit der Faltbewegung der Verteilsegmente ebenfalls in eine Transportposition. Eine Fehlbetätigung oder eine erforderliche, aufwendige Folgeschaltung erübrigt sich.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine schematisch dargestellte landwirtschaftliche Feldspritze mit Blick in Fahrtrichtung von hinten auf das Verteilgestänge
Fig.2 die gleiche schematisch dargestellte Feldspritze in Ansicht von oben,
Fig. 3 bis Fig. 6 perspektivische Darstellungen zweier Verteilsegmente in der Reihenfolge des Faltvorganges.

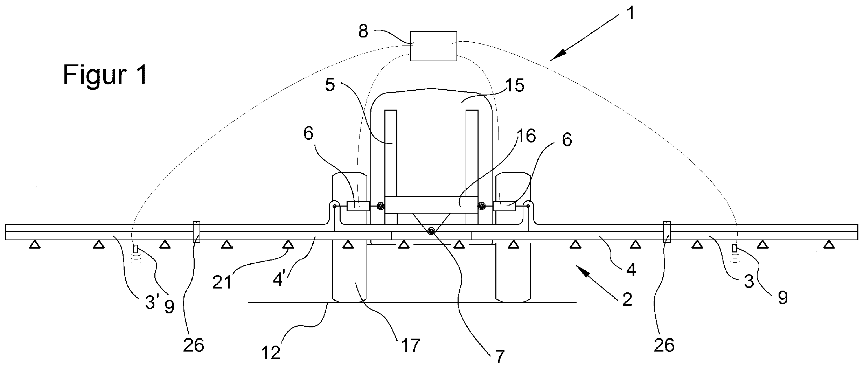

Figur 1 zeigt eine landwirtschaftliche Feldspritze 1 in Heckansicht. Die Feldspritze 1 wird von einem Rahmen 5 getragen, welcher auf einem Fahrwerk mit einer Laufachse 17 befestigt ist. Ein nicht dargestelltes Zugfahrzeug zieht die Feldspritze 1 über die Bodenoberfläche 12 und versorgt die Feldspritze 1 mit Energie zum Betrieb ihrer Aggregate. Hinter dem Vorratsbehälter 15 ist eine Höhenverstelleinrichtung 16 am Rahmen 5 befestigt, um das Verteilgestänge 2 der Feldspritze 1 relativ zur Bodenoberfläche 12 in der Höhe zu bewegen. Das Verteilgestänge 2, bestehend aus beispielsweise vier Verteilsegmenten 3, 3', 4, 4' ist pendelnd um eine Achse 7 an der Höhenverstelleinrichtung 16 aufgehängt. Die Achse 7 ist vorzugsweise horizontal angeordnet und parallel zur Fahrtrichtung ausgerichtet. Zwischen Höhenverstelleinrichtung 16 und den beiden inneren Verteilsegmenten 4, 4' sind längenveränderliche Stellelemente 6 gelenkig angebracht. Rechts und links an den äußeren Verteilsegmenten 3, 3' sind Abstandsmesseinrichtungen 9 angeordnet, welche den Abstand der jeweiligen Verteilsegmente 3, 3', 4, 4' und somit der daran befestigten Ausbringdüsen 21 zur Bodenoberfläche 12 kontinuierlich oder in Intervallen messen und diesen einer Steuerungs- und Regelungseinheit 8 mitteilen. Mit einem hinterlegten Programm errechnet die Steuerungs- und Regelungseinheit 8 die erforderlichen Stellsignale für die Höhenverstelleinrichtung 16 bzw. die Stelleinrichtung 6 und bestätigt diese. Nicht weiter dargestellt sind Pumpen, Ventile und Flüssigkeitsleitungen zur Versorgung der Ausbringdüsen 21 mit auszubringender Flüssigkeit aus dem Vorratsbehälter 15 der Feldspritze 1. Mit vertikalen wirksamen Gelenkachsen 26 sind die Verteilsegmente 3,4 bzw. 3',4' zueinander beweglich gelagert, um das Verteilgestänge 2 aus einer dargestellten Arbeitsposition mit maximaler Breite in eine kleinere Transportbreite zu falten.

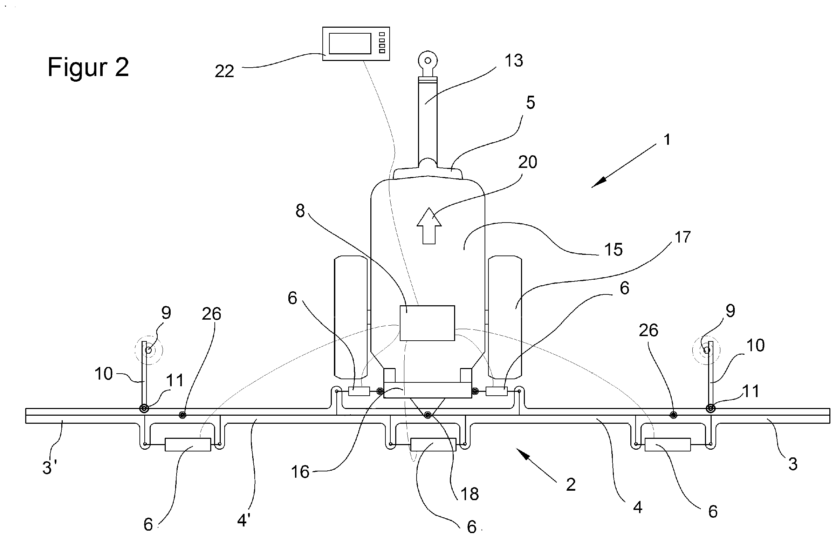

Figur 2 zeigt die gleiche schematische landwirtschaftliche Feldspritze 1 in Draufsicht. Diese ist über die Zugeinrichtung 13 mit einem nicht dargestellten ziehenden Fahrzeug verbunden, auf welchem auch das Bedienterminal 22 zur Bedienung der Feldspritze 1 installiert ist. Die Zugeinrichtung 13 ist mit dem Rahmen 5 der Feldspritze 1 verbunden. Unter dem Rahmen 5 ist das Fahrwerk bzw. die Laufachse 17 angeordnet. Auf dem Rahmen lastet der Vorratsbehälter 15 mit auszubringender Flüssigkeit. Hinten am Rahmen 5 ist die Höhenverstelleinrichtung 16 angebracht, und an dieser sind um zumindest eine Gelenkachse 18, welche vorzugsweise vertikal ausgerichtet ist, die beiden inneren Verteilsegmente 4, 4' beweglich angeordnet und um eine weitere vertikale Gelenkachse 26 die beiden äußeren Verteilsegmenten 3, 3' beweglich zu den Verteilsegmenten 4, 4' angeordnet. Über verschiedene Stellelemente 6 können die Verteilsegmente 3, 3', 4, 4' zueinander bzw. zur Höhenverstelleinrichtung 16 bewegt und ausgerichtet werden, vorzugsweise in einer durchgehenden Linie und quer zur Feldspritze bzw. quer zur Fahrtrichtung. Die jeweiligen Stellelemente 6 werden von der Steuer- und Regeleinrichtung 8 betätigt und mit Energie versorgt. Die Stellelemente 6 dienen auch dem Zusammenfalten des Verteilgestänges 2 von der dargestellten Arbeitsposition in eine schmalere Transportposition.

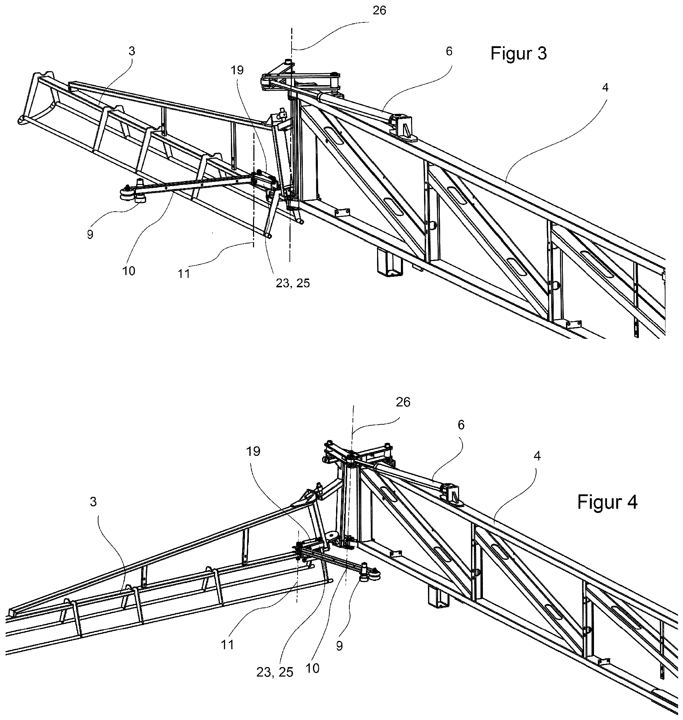

Figur 3 zeigt die Anordnung zweier Verteilsegmente 3, 4, welche in gestreckter Lage über die Gelenkachse 26 zueinander angeordnet sind. Ein Stellelement 6 in Form eines doppelt wirkenden Hydraulikzylinders hat das Verteilsegment 3 über ein Viergelenk relativ zu Verteilsegment 4 in die dargestellte Position gebracht und dort arretiert. Über einen Halter 25, welcher am Verteilsegment 3 montiert ist, ist um die Achse 11 beweglich ein Arm 10 angeordnet. Der Achse 11 gegenüberliegend ist am anderen Ende des Armes 10 die Abstandsmesseinrichtung 9 mit Erfassungsrichtung nach unten angeordnet. Zwischen Halter 25 und Arm 10 ist ein Energiespeicher 19 angeordnet, welcher den Arm 10 in der gezeigten, in Fahrtrichtung senkrecht vom Verteilsegment 3 abstehenden Lage darstellt. Dabei wird der Arm 10 vom Energiespeicher in Form einer Gasfeder gegen einen Anschlag 23 am Halter 25 angepresst. Ebenso kann der Energiespeicher 19 selbst den Schwenkanschlag bilden.

Figur 4 zeigt die gleichen Elemente wie Figur 3, jedoch hat Verteilsegment 3 durch das Stellelement 6 betätigt eine im Winkel von 90 Grad zum Verteilsegment befindliche Zwischenstellung eingenommen. Der Arm 10 befindet sich unverändert senkrecht abstehend von Verteilsegment 3, aufgrund dessen Schwenkbewegung um Gelenkachse 11 aber nun annähernd parallel zum Verteilsegment 4 ausgerichtet und immer noch von Energiespeicher 19 und Anschlag 23 in Position gehalten.

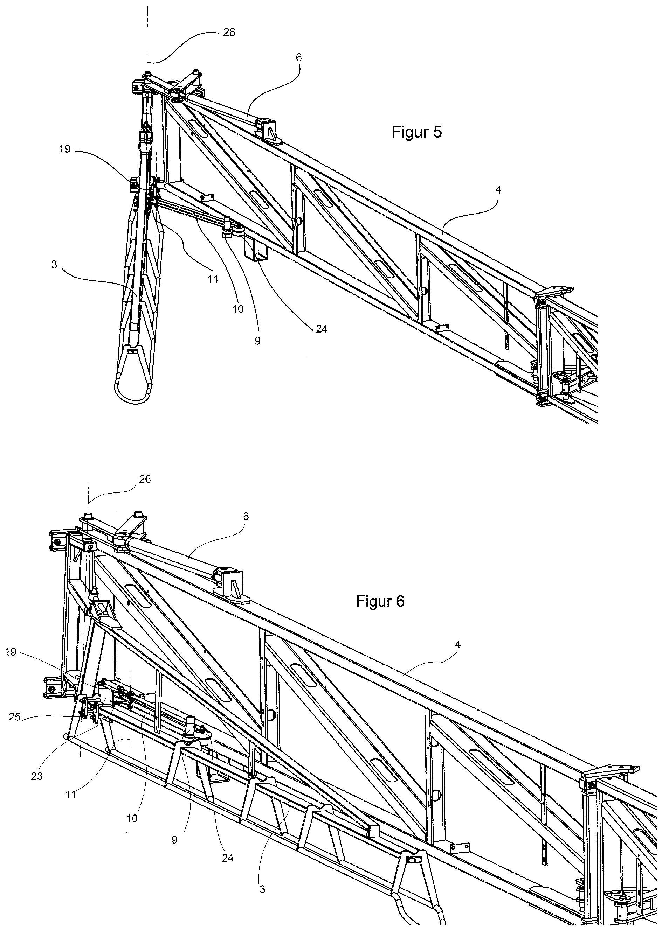

In Figur 5 ist nun Verteilsegment 3 um etwa 135 Grad um die Gelenkachse 26 relativ zu Verteilsegment 4 eingeschwenkt. Das Ende des Armes 10 stößt nun mit dem Anschlag-/Gleitelement 24, hier als doppelter Satz von elastischen Kunststoffrollen ausgeführt, gegen die Kontur des Verteilsegmentes 4. Durch die weitere, durch das Stellelement 6 verursachte Schwenkbewegung des Verteilsegmentes 3 weicht der Arm 10 mit Abstandsmesseinrichtung 9 entlang der Verteilsegmentkontur 4 entgegen der Stellkraft des Energiespeichers 19 aus und richtet sich in Endlage parallel und zwischen den Verteilsegmenten 3, 4 aus.

In Figur 6 ist die erreichte Endlage dargestellt. Der Arm 10 mit Abstandsmesseinrichtung 9 ist nun zwischen den Verteilsegmenten 3, 4 geschützt gegen Beschädigungen verstaut. Der Ausklapp- oder Entfaltvorgang der Segmente und beteiligten Komponenten erfolgt in umgekehrter Reihenfolge.

Beispielhaft in den vorherigen Figuren ist nur der Faltvorgang der beiden Verteilsegmente 3, 4 dargestellt, welche die Bewegung des Armes und somit der Abstandmessvorrichtung darstellen.

Es folgen 4 Blatt mit Zeichnung.

**BEZUGSZEICHENLISTE**

| | |
|---|---|
| 1 | Landwirtschaftliche Feldspritze |
| 2 | Verteilgestänge |
| 3 | Verteilsegment |
| 4 | Verteilsegment |
| 5 | Rahmen |
| 6 | Stellmotoren |
| 7 | Längsachse |
| 8 | Steuer- und Regeleinrichtung |
| 9 | Abstandmesseinrichtung |
| 10 | Arm |
| 11 | Gelenkachse |
| 12 | Boden |
| 13 | Zugeinrichtung |
| 14 | Rahmen |
| 15 | Vorratsbehälter |
| 16 | Höhenverstelleinrichtung |
| 17 | Laufachse |
| 18 | Gelenkachse |
| 19 | Energiespeicher |
| 20 | Fahrtrichtung |
| 21 | Ausbringdüsen |
| 22 | Anzeige - und Bedieneinheit |
| 23 | Anschlagelement |
| 24 | Anschlag- / Gleitelement |
| 25 | Halter |
| 26 | Gelenkachse |

## Patentansprüche

1. Landwirtschaftliche Feldspritze (1), fahrbar oder von einem Fahrzeug tragbar, mit einem Verteilgestänge (2) zur Ausbringung von zu verteilenden Flüssigkeiten, wobei das Verteilgestänge (2) aus mehreren, zueinander beweglichen Verteilsegmenten (3, 3' 4, 4') besteht, welche mit Ausbringleitungen und Ausbringdüsen (21) versehen sind, wobei das Verteilgestänge (2) oder die Verteilsegmente (3, 3', 4, 4') zueinander oder zur Verteilmaschine über zumindest eine annähernd parallel zur Fahrtrichtung der Feldspritze (1) ausgerichtete Längsachse (7) beweglich oder pendelnd angeordnet sind, wobei zumindest im Abstand zu mindestens einer Längsachse (7) ein Stell-, Feder- oder Dämpfungsglied (6, 6') angeordnet ist, mit welchem der Abstand oder die Neigung des Verteilgestänges (2) oder zumindest eines Verteilsegmentes (3, 4) zur Kontur der überfahrenen Bodenoberfläche (12) in Verbindung mit einer Steuerungs- oder Regeleinrichtung (8) manipuliert werden kann, wobei das Verteilgestänge (2) mit seinen Verteilsegmenten (3, 3' 4, 4') von einer sich quer zur Fahrtrichtung (20) der Feldspritze (1) erstreckenden Arbeitsstellung in eine der Transportbreite der Feldspritze (1) entsprechenden Transportstellung faltbar ist und dass zumindest ein rechts und ein links von der Feldspritze befindliches Verteilsegment (3, 3', 4, 4') mit einer Abstandsmesseinrichtung (9) versehen ist, welche dazu konfiguriert ist ihre Messsignale als Führungsgröße an die Steuerungs- oder Regeleinrichtung (8) zu übertragen, **dadurch gekennzeichnet,**
**dass** die Abstandsmesseinrichtung (9) an einem beweglichen Arm (10) angeordnet ist, wobei der Arm (10) mechanisch durch die Faltbewegung des Verteilgestänges (2) und / oder der Schwenkbewegung der einzelnen Verteilsegmente (3, 3' 4, 4') zueinander von einer annähernd senkrecht zu einem Verteilsegment in Fahrtrichtung (20) abstehenden Lage, nämlich der Arbeitsstellung, in eine annähernd parallel zu einem Verteilsegment (3, 3', 4, 4') verlaufende Lage, nämlich der Transportstellung, und umgekehrt bewegbar angeordnet ist.

2. Landwirtschaftliche Feldspritze nach Anspruch 1,
**dadurch gekennzeichnet,**
**dass** die Schwenkbewegung des Armes (10) etwa die Hälfte des Schwenkwinkels eines Verteilsegments (3) zu einem weiteren Verteilsegment (4) beschreibt.

3. Landwirtschaftliche Feldspritze nach Anspruch 1 oder 2,
**dadurch gekennzeichnet,**
**dass** die Länge des Armes (10) oder der Abstand der Abstandsmesseinrichtung (9) zu einem Verteilsegment (3) in Fahrtrichtung (20) gesehen in etwa gleich oder größer dem Betrag des empfohlenen Düsenabstandes zur überfahrenen Bodenoberfläche (12) bzw. zur Bestandsoberkante des auf der Bodenoberfläche befindlichen Pflanzenbestandes entspricht.

4. Landwirtschaftliche Feldspritze nach einem der vorstehenden Ansprüche,
**dadurch gekennzeichnet,**
**dass** der Arm (10) beweglich an einem ersten Verteilsegment (3) angeordnet und mit einem Koppelmechanismus versehen ist, welcher den Arm (10) gelenkig mit einem weiteren Verteilsegment (4) verbindet.

5. Landwirtschaftliche Feldspritze nach einem der vorstehenden Ansprüche,
**dadurch gekennzeichnet,**
**dass** der Arm (10) gelenkig mit einem Verteilsegment (3) verbunden ist und der Arm (10) über zwei Anschlagelemente verfügt, wobei ein erstes Anschlagelement die Schwenkbewegung vom Arm zum Verteilsegment (3) begrenzt, an welchem der Arm (10) montiert ist und ein weiteres Anschlag- oder Gleitelement durch Kontakt mit einem weiteren Verteilsegment (4) während der Faltbewegung des Verteilgestänges (2) den Arm in eine Transportstellung oder umgekehrt in Arbeitsstellung überführt.

6. Landwirtschaftliche Feldspritze nach einem der vorstehenden Ansprüche,
**dadurch gekennzeichnet,**
**dass** zwischen Arm (10) und Verteilsegment (3, 4) ein Energiespeicher angeordnet ist, welcher den Arm (10) in einer Arbeits- und/oder Transportlage hält oder fixiert.

7. Landwirtschaftliche Feldspritze nach einem der vorstehenden Ansprüche,
**dadurch gekennzeichnet,**
**dass** der Arm (10) mehrteilig ausgeführt ist, wobei ein erster Teil mit einem ersten Verteilsegment (3) gelenkig verbunden ist und ein zweiter Teil mit einem benachbarten Verteilsegment (4) gelenkig verbunden ist und der erste und der zweite Teil des mehrteiligen Armes ebenfalls gelenkig miteinander verbunden sind.

## Claims

1. An agricultural field sprayer (1), drivable or portable by a vehicle, comprising a distribution rod assembly (2) for applying liquids to be distributed, wherein the distribution rod assembly (2) consists of several distribution segments (3, 3' 4, 4'), which are movable relative to one another and which are provided with application pipes and application nozzles (21), wherein the distribution rod assembly (2) or the distribution segments (3, 3', 4, 4') are movably or oscillatingly arranged relative to one another or relative to the distribution machine via at least one longitudinal axis (7), which is aligned approximately parallel to the driving direction of the field sprayer (1), wherein, at least at a distance to at least one longitudinal axis (7), an adjusting, spring, or damping member (6, 6') is arranged, by means of which the distance or the inclination of the distribution rod assembly (2) or of at least one distribution segment (3, 4) to the contour of the traversable soil (12) can be manipulated in connection with a control or regulating means (8), wherein the distribution rod assembly (2) with its distribution segments (3, 3' 4, 4') can be folded from a work position extending transversely to the driving direction (20) of the field sprayer (1), into a transport position corresponding to the transport width of the field sprayer (1), and that at least one distribution segment (3, 3', 4, 4') located to the right and at least one distribution segment (3, 3', 4, 4') located to the left of the field sprayer is provided with a distance measuring means (9), which is configured to transfer its measuring signals as guide variable to the control or regulating means (8),
**characterized in**
**that** the distance measuring means (9) is arranged at a movable arm (10), wherein the arm (10) is arranged so as to be capable of being moved mechanically by means of the folding movement of the distribution segment (2) and/or the pivoting movement of the individual distribution segments (3, 3', 4, 4') relative to one another from a position, namely the work position, protruding approximately perpendicularly to a distribution segment in the driving direction (20), into a position, namely the transport position, running approximately parallel to a distribution segment (3, 3', 4, 4'), and vice versa.

2. The agricultural field sprayer according to claim 1,
**characterized in**
**that** the pivoting movement of the arm (10) describes approximately half of the pivot angle of a distribution segment (3) relative to a further distribution segment (4).

3. The agricultural field sprayer according to claim 1 or 2,
**characterized in**
**that** the length of the arm (10) or the distance of the distance measuring means (9) to a distribution segment (3), viewed in the driving direction (20), is approximately equal to or larger than the sum of the suggested nozzle distance to the traversed soil (12) or to the top edge of the crop of the plant crop located on the soil, respectively.

4. The agricultural field sprayer according to one of the preceding claims,
**characterized in**
**that** the arm (10) is movably arranged at a first distribution segment (3) and is provided with a coupling mechanism, which connects the arm (10) in an articulated manner to a further distribution segment (4).

5. The agricultural sprayer according to one of the preceding claims,
**characterized in**
**that** the arm (10) is connected in an articulated manner to a distribution segment (3), and the arm (10) has two stop elements, wherein a first stop element limits the pivoting movement from the arm to the distribution segment (3), to which the arm (10) is mounted, and a further stop or sliding element transfers the arm into a transport position or vice versa into work position by contact with a further distribution segment (4) during the folding movement of the distribution rod assembly (2).

6. The agricultural field sprayer according to one of the preceding claims,
**characterized in**
**that** an energy storage, which holds or fixes the arm (10) in a work and/or transport position, is arranged between arm (10) and distribution segment (3, 4).

7. The agricultural field sprayer according to one of the preceding claims,
**characterized in**
**that** the arm (10) is embodied in multiple parts, wherein a first part is connected in an articulated manner to a first distribution segment (3), and a second part is connected in an articulated manner to an adjacent distribution segment (4), and the first and the second part of the multi-part arm are likewise connected to one another in an articulated manner.

## Revendications

1. Pulvérisateur agricole (1), déplaçable ou susceptible d'être porté par un véhicule, pourvu d'une rampe distributrice (2) destinée à épandre des liquides à distribuer, la rampe distributrice (2) étant constituée de plusieurs segments distributeurs (3, 3' 4, 4'), mobiles les uns par rapport aux autres, lesquels sont munis de conduits d'épandage et de buses d'épandage (21), la rampe distributrice (2) ou les segments distributeurs (3, 3', 4, 4') étant placés en étant mobiles ou oscillants réciproquement ou par rapport à l'épandeur par l'intermédiaire d'un axe longitudinal (7) au moins approximativement parallèle eu sens de déplacement du pulvérisateur agricole (1), au moins avec un écart par rapport à au moins un axe longitudinal (7) étant placé un élément actionneur, un élément élastique ou un élément amortisseur (6, 6') à l'aide duquel l'écart ou l'inclinaison de la rampe distributrice (2) ou d'au moins un segment distributeur (3, 4) par rapport au contour de la surface au sol (12) pratiquée peut se manipuler, en association avec un système de commande ou de réglage (8), la rampe distributrice (2) étant susceptible d'être pliée par ses segments distributeurs (3, 3' 4, 4') d'une position de travail s'étendant à la transversale de la direction de déplacement (20) du pulvérisateur agricole (1) dans une position de transport correspondant à la largeur de transport du pulvérisateur agricole (1) et au moins un segment distributeur (3, 3', 4, 4') se trouvant à droite et un à gauche du pulvérisateur agricole étant muni d'un système de mesure de distance (9), lequel est configuré pour transmettre ses signaux de mesure en tant que grandeur de guidage au système de commande ou de réglage (8),
**caractérisé**
**en ce que** le système de mesure de distance (9) est placé sur un bras (10) mobile, le bras (10) étant placé en étant mobile mécaniquement par le mouvement de pliage de la rampe distributrice (2) et/ou par le mouvement pivotant des segments distributeurs (3, 3', 4, 4') individuels les uns par rapport aux autres, d'une position distante approximativement à la perpendiculaire d'un segment distributeur dans la direction de déplacement (20), à savoir de la position de travail, dans une position s'écoulant approximativement à la parallèle d'un segment distributeur (3, 3', 4, 4'), à savoir la position de transport, et inversement.

2. Pulvérisateur agricole selon la revendication 1,
**caractérisé**
**en ce que** le mouvement pivotant du bras (10) décrit approximativement la moitié de l'angle de pivotement d'un segment distributeur (3) par rapport à un autre segment distributeur (4).

3. Pulvérisateur agricole selon la revendication 1 ou 2,
**caractérisé**
**en ce que** la longueur du bras (10) ou l'écart entre le système de mesure de distance (9) et un segment distributeur (3), vu dans la direction de déplacement (20) est approximativement supérieur ou égal au montant de l'écart recommandé des buses par rapport à la surface au sol (12) pratiquée ou à l'arête supérieure des cultures se trouvant sur la surface au sol.

4. Pulvérisateur agricole selon l'une quelconque des revendications précédentes,
**caractérisé**
**en ce que** le bras (10) est placé de manière mobile sur un segment distributeur (3) et est muni d'un mécanisme de couplage, lequel relie le bras (10) de manière articulée avec un autre segment distributeur (4).

5. Pulvérisateur agricole selon l'une quelconque des revendications précédentes,
**caractérisé**
**en ce que** le bras (10) est relié de manière articulée avec un segment distributeur (3) et **en ce que** le bras (10) dispose de deux éléments de butée, un premier élément de butée limitant le mouvement pivotant du bras par rapport au segment distributeur (3) sur lequel le bras (10) est monté et par contact avec un autre segment distributeur (4), un autre élément de butée et de coulissement faisant passer le bras dans une position de transport ou inversement dans la position de travail, pendant le mouvement de pliage de la rampe distributrice (2).

6. Pulvérisateur agricole selon l'une quelconque des revendications précédentes,
**caractérisé**
**en ce qu'**entre le bras (10) et le segment distributeur (3, 4) est placé un accumulateur d'énergie, lequel maintient ou fixe le bras (10) dans une position de travail et/ou de transport.

7. Pulvérisateur agricole selon l'une quelconque des revendications précédentes,
**caractérisé**
**en ce que** le bras (10) est réalisé en plusieurs parties, une première partie étant reliée de manière articulée avec un premier segment distributeur (3) et une deuxième partie étant reliée de manière articulée avec un segment distributeur (4) voisin et la première et la deuxième parties du bras en plusieurs parties étant également reliées l'une à l'autre de manière articulée.
